# EUROPEAN PATENT APPLICATION

(11) **EP 4 744 949 A1**
(43) Date of publication of application: **20.05.2026**
(21) Application number: 25189848.2
(22) Date of filing: 16.07.2025
(51) Int. Cl.: B60L 53/53, B60L 53/62, B60L 53/66, B60L 58/12

(54) **CHARGING STATION SHARING SYSTEM**

(30) Priority: 18.11.2024 US 202463721693 P; 11.06.2025 US 202519234737
(71) Applicant: KUBOTA CORPORATION, Osaka-shi, Osaka 556-8601 (JP)
(72) Inventor: MURATA, Yusuke, Fremont, 94538 (US)
(74) Representative: Müller-Boré & Partner Patentanwälte PartG mbB

(57) **Abstract**

A sharing system to share a charging station to charge electric vehicles, includes a charging plan calculator configured or programmed to, based on an amount of electricity that the charging station has, based on a work plan including work done by a subject vehicle which is an electric vehicle, and based on a remaining battery level of the subject vehicle, calculate a charging plan to ensure charging of the subject vehicle by the charging station, and a shared charging determiner configured or programmed to, based on the amount of electricity that the charging station has and based on the charging plan, determine whether shared charging is available or not, the shared charging including using the charging station to charge an external vehicle other than the subject vehicle.

## Description

### CROSS REFERENCE TO RELATED APPLICATIONS

This application claims the benefit of priority to U.S. Provisional Patent Application No. 63/721,693 filed on November 18, 2024. The entire contents of this application is hereby incorporated herein by reference.

### BACKGROUND OF THE INVENTION

### 1. Field of the Invention

The present invention relates to sharing systems to share charging stations to charge electric vehicles.

### 2. Description of the Related Art

International Publication No. 2023/039272 discloses a mobile electric automobile charging station (hereinafter also referred to as a "mobile charging station" as appropriate). Japanese Patent No. 7409355 discloses an electric tractor that estimates a battery charging level at a time when work in predetermined agricultural fields is finished.

### SUMMARY OF THE INVENTION

For example, it is possible that an owner (i.e., an individual) of agricultural fields owns the mobile charging station described in International Publication No. 2023/039272 and uses the mobile charging station to charge the electric tractor described in Japanese Patent No. 7409355. For example, because the electric tractor works in the agricultural fields based on a work plan for the agricultural fields generated in advance, the electric tractor is charged by the mobile charging station in a charging period before or after the work in the agricultural fields specified in the work plan. That is, because a mobile charging station owned by an individual needs to charge an electric tractor that is owned by the individual and that is included in a work plan with top priority and certainty in order for the electric tractor to work in agricultural fields as specified in the work plan, it is difficult to use the mobile charging station to charge an external vehicle outside the work plan (e.g., an electric vehicle owned by a stranger).

Example embodiments of the present invention provide sharing systems in each of which a charging station is shared and used by an external vehicle outside a work plan and effectively used outside the work plan.

A sharing system according to an example embodiment of the present invention is a sharing system to share a charging station to charge electric vehicles, the sharing system including a charging plan calculator configured or programmed to, based on an amount of electricity that the charging station has, based on a work plan including work to be done by a subject vehicle which is an electric vehicle, and based on a remaining battery level of the subject vehicle, calculate a charging plan to ensure charging of the subject vehicle by the charging station, and a shared charging determiner configured or programmed to, based on an amount of electricity that the charging station has and based on the charging plan, determine whether shared charging is available or not, the shared charging including using the charging station to charge an external vehicle other than the subject vehicle.

The charging plan calculated by the charging plan calculator may be prioritized over the determination by the shared charging determiner that the shared charging is available.

The shared charging determiner may be configured or programmed to determine that the shared charging is available when a value obtained by subtracting an amount of electricity to be consumed by charging the subject vehicle from the amount of electricity that the charging station has is equal to or more than a predetermined value.

The sharing system may further include a permission determiner configured or programmed to determine that the shared charging is permitted by a manager of the charging station, and a shared charging plan calculator configured or programmed to, when the shared charging determiner determines that the shared charging is available and the permission determiner determines that the shared charging is permitted, generate a shared charging plan to charge the external vehicle.

The shared charging plan calculator may be configured or programmed to, based on the amount of electricity to be consumed by charging the subject vehicle and charging time-of-day information which are included in the charging plan, calculate a time-of-day during which the shared charging is permitted and an upper limit of the amount of electricity supplied by the shared charging.

The charging station may be a portable charging station. The shared charging plan calculator may be configured or programmed to calculate a shared charging position at which the shared charging is to be performed, and calculate the time-of-day during which the shared charging is permitted, based on a time required for the portable charging station to move from a prioritized charging position to the shared charging position and based on the charging time-of-day information relating to charging of the subject vehicle, the prioritized charging position being included in the charging plan and being a position at which the subject vehicle is to be charged.

The charging station may be a mobile charging station powered by electricity thereof to travel alone. The shared charging plan calculator may be configured or programmed to calculate an upper limit of the amount of electricity to be supplied by the shared charging, based on the amount of electricity to be consumed by the mobile charging station moving from a prioritized charging position to a shared charging position, the prioritized charging position being a position at which the subject vehicle is to be charged and being included in the charging plan, the shared charging position being a position at which the shared charging is to be performed.

The shared charging plan calculator may be configured or programmed to calculate the upper limit of the amount of electricity to be supplied by the shared charging, based on the amount of electricity to be consumed by the charging station to move from the shared charging position to a storage location of the charging station pre-set by the manager.

The sharing system according may further include a server. The server may be configured or programmed to acquire the determination that the shared charging by the charging station is permitted, and transmit, to the external vehicle, the shared charging plan and position information of the charging station for which the shared charging is permitted.

The charging station may include a low-voltage power output and a high-voltage power output, and be configured or programmed to, based on a time-of-day during which the shared charging is permitted, determine which of the low-voltage power output and the high-voltage power output to use to perform the permitted shared charging.

The charging station may be a mobile charging station powered by electricity thereof to travel alone, and be configured or programmed to, in a case that the shared charging is determined to be available, travel from a prioritized charging position via a shared charging position to a storage location of the charging station such that the amount of electricity for the charging station to travel from the shared charging position to the storage location is at least ensured when the shared charging ends, the shared charging position being a position at which the shared charging is to be performed, the prioritized charging position being a position at which the subject vehicle is to be charged and being included in the charging plan.

The sharing system may further include a terminal. The server may be configured or programmed to transmit, to the terminal, the shared charging plan and position information of the charging station for which the shared charging is permitted.

The terminal may be a first terminal operable by the manager of the charging station.

The terminal may include a second terminal in or on the external vehicle.

A second terminal may be configured or programmed to, upon receipt of a request for a reservation of the shared charging, transmit, to the shared charging determiner, reservation information indicating that the reservation of the shared charging is requested. The shared charging determiner may be configured or programmed to transmit, to the second terminal, a result of the determination of whether the shared charging for which the reservation is requested is available or not. The second terminal may be configured or programmed to display the result of the determination of whether the shared charging is available or not.

The above and other elements, features, steps, characteristics and advantages of the present invention will become more apparent from the following detailed description of the example embodiments with reference to the attached drawings.

### BRIEF DESCRIPTION OF THE DRAWINGS

A more complete appreciation of example embodiments of the present invention and many of the attendant advantages thereof will be readily obtained as the same becomes better understood by reference to the following detailed description when considered in connection with the accompanying drawings described below.
FIG. 1 is a schematic diagram illustrating a sharing system of a charging station according to an example embodiment of the present invention.
FIG. 2 is a side view of a working vehicle.

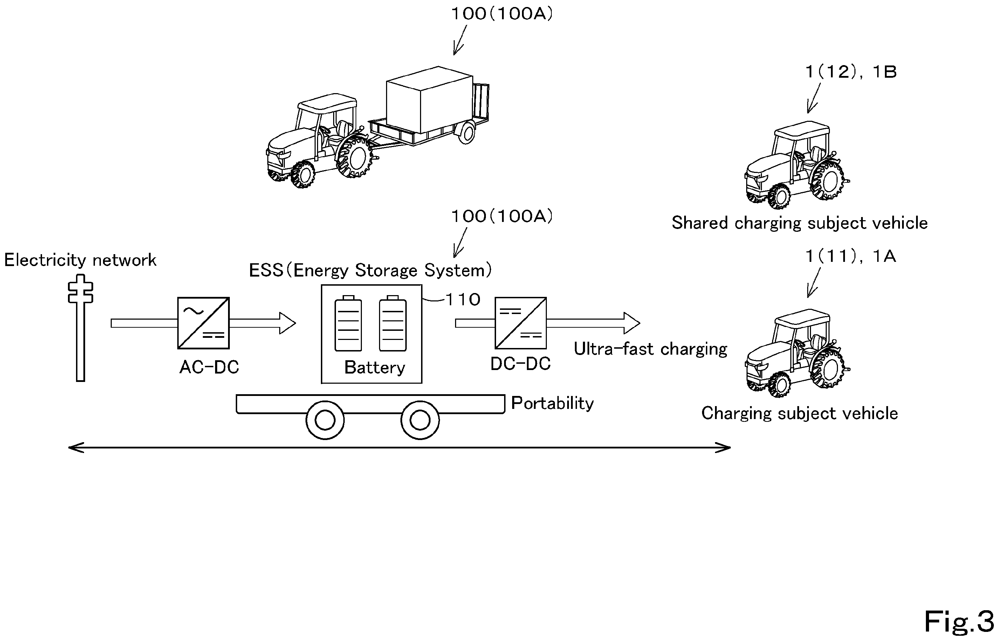

FIG. 3 is a diagram indicating that the charging station performs ultra-fast charging on a subject vehicle.
FIG. 4 is a block diagram illustrating the sharing system of the charging station according to an example embodiment of the present invention.
FIG. 5 is a block diagram illustrating each of components of a server and a portable charging station.
FIG. 6 is a block diagram illustrating each of components of the server and a mobile charging station.
FIG. 7 is a flowchart illustrating a process for sharing the charging station performed by the server.
FIG. 8A is a diagram illustrating a procedure for generating a work plan, a charging plan, and a shared charging plan.
FIG. 8B is a diagram illustrating an example of the charging plan, the shared charging plan, and a corrected charging plan.
FIG. 9 is a diagram illustrating an example of sharing of the charging station.

### DETAILED DESCRIPTION OF THE EXAMPLE EMBODIMENTS

Example embodiments will now be described with reference to the accompanying drawings, wherein like reference numerals designate corresponding or identical elements throughout the various drawings. The drawings are to be viewed in an orientation in which the reference numerals are viewed correctly.

Example embodiments of the present invention will be described hereinafter with reference to the drawings.

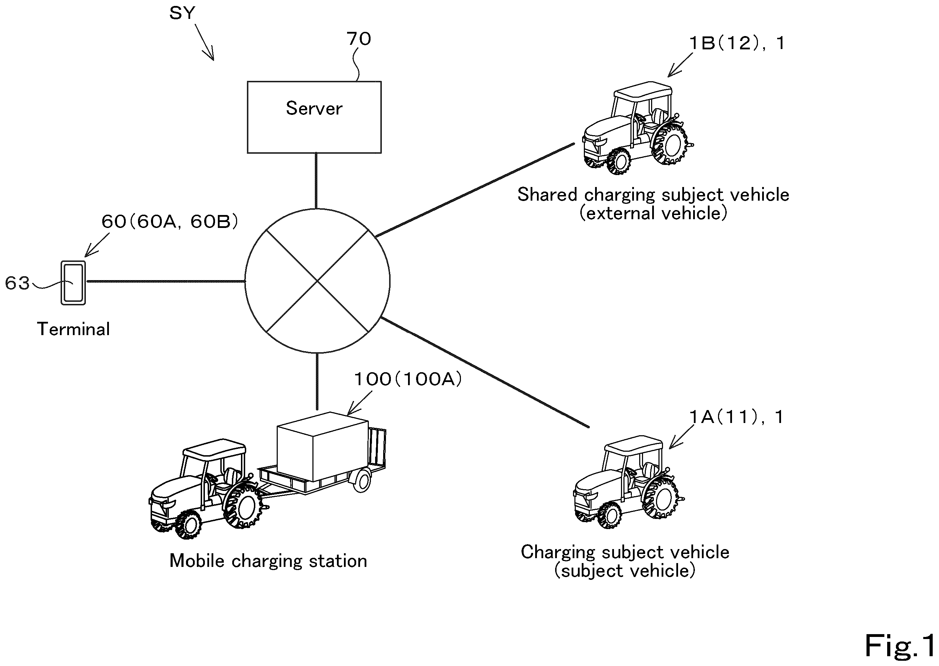

FIG. 1 is a block diagram illustrating a sharing system SY of a charging station 100 according to an example embodiment. As illustrated in FIG. 1, the sharing system SY of the charging station 100 is, for example, a system (apparatus) that enables sharing of the charging station 100 that charges electric vehicles 1.

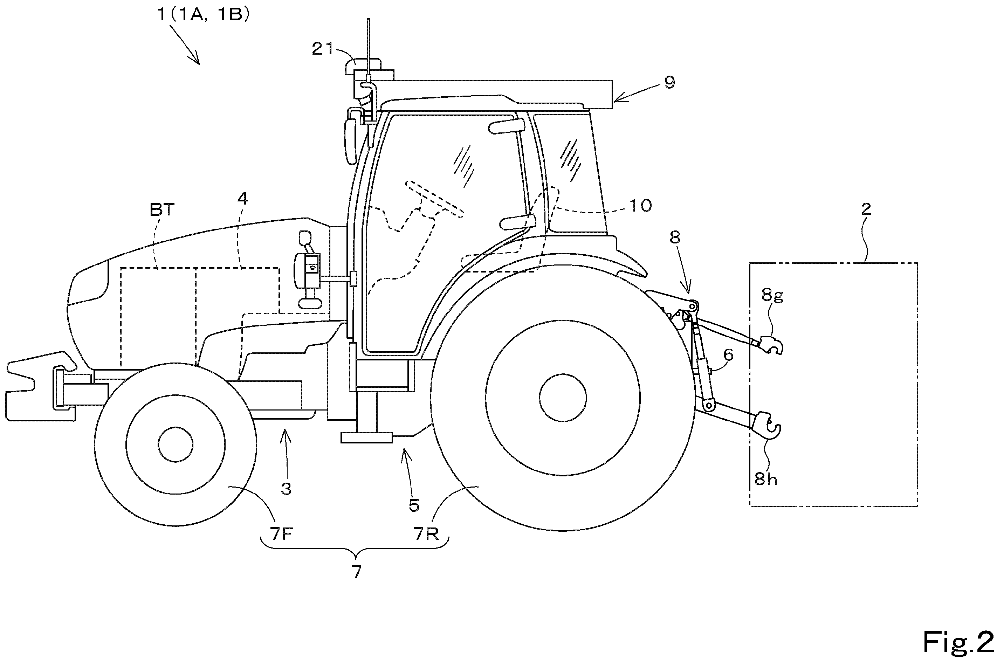

As illustrated in FIGS. 1 and 2, the electric vehicles 1 are, for example, electric tractors. FIG. 2 is a side view of each of the electric vehicles 1. As illustrated in FIG. 2, the electric vehicle 1 includes a battery BT, a traveling vehicle body 3, a prime mover 4, a transmission 5, and traveling devices 7. Front wheels 7F of the traveling devices 7 may be of a tire type or a crawler type. Rear wheels 7R of the traveling devices 7 may also be of a tire type or a crawler type. The prime mover 4 includes an electric motor driven by electricity from the battery BT. The transmission 5 is capable of switching propelling force of the traveling devices 7 through gear shifting and switching the traveling devices 7 between forward travel and rearward travel. The transmission 5 transfers driving force of the prime mover 4 to the traveling devices 7 to drive the traveling devices 7 and cause the traveling vehicle body 3 to travel forward or rearward. The transmission 5 also transfers the driving force of the prime mover 4 to a power take-off (PTO) shaft 6. The PTO shaft 6 is an output shaft that drives a working device 2 when connected to the working device 2.

A cabin 9 is provided for the traveling vehicle body 3. An operator's seat 10 is provided inside the cabin 9. A coupler 8 including a three-point linkage or the like is provided in the rear of the traveling vehicle body 3. The coupler 8 is used to couple a working device (an implement) 2 for performing farm work with the traveling vehicle body 3. More specifically, by coupling the working device 2 with coupling units 8g and 8h provided for the coupler 8, the working device 2 and the traveling vehicle body 3 are coupled with each other, and the electric vehicle 1 can tow the working device 2. That is, the working device 2 can be attached to the electric vehicle 1.

The working device 2 performs work on work fields (e.g., agricultural fields) or work targets in the work fields (e.g., crops planted in the agricultural fields). The working device 2 is a cultivator for cultivation, a ridger for ridging, a furrower for furrowing, a harvester for harvesting, a mower for mowing grass or the like, a tedder for tedding grass or the like, a rake for raking grass or the like, a baler for baling grass or the like, a fertilizer spreader for spreading fertilizer, an agricultural chemical spreader for spreading agricultural chemicals, a separator for separating crops, or the like. In the present example embodiment, the working device 2 is, for example, a fertilizer spreader or an agricultural chemical spreader.

The electric vehicle 1 includes a positioning device 21 that detects a position thereof. The positioning device 21 detects the position thereof (latitude and longitude) based on data from positioning satellites (positioning satellite system) such as a GPS or Michibiki. The positioning device 21 may include inertial devices such as an acceleration sensor that detects acceleration and a gyroscope sensor that detects angular velocity, and may correct the position using the acceleration and the angular velocity detected by the inertial devices, other correction signals, or the like.

The electric vehicle 1 is not limited to an electric tractor, and may be, for example, an electric construction vehicle such as an electric backhoe, an electric loader (an electric wheel loader, an electric compact track loader, an electric skid-steer loader, etc.) or an electric working vehicle such as an electric utility vehicle (multipurpose working vehicle), or may be an electric automobile other than an electric working vehicle.

As illustrated in FIG. 1, the sharing system SY of the charging station 100 includes, for example, the charging station 100 and a server 70. The charging station 100 and the server 70 are communicable with each other over an information communication network such as the Internet.

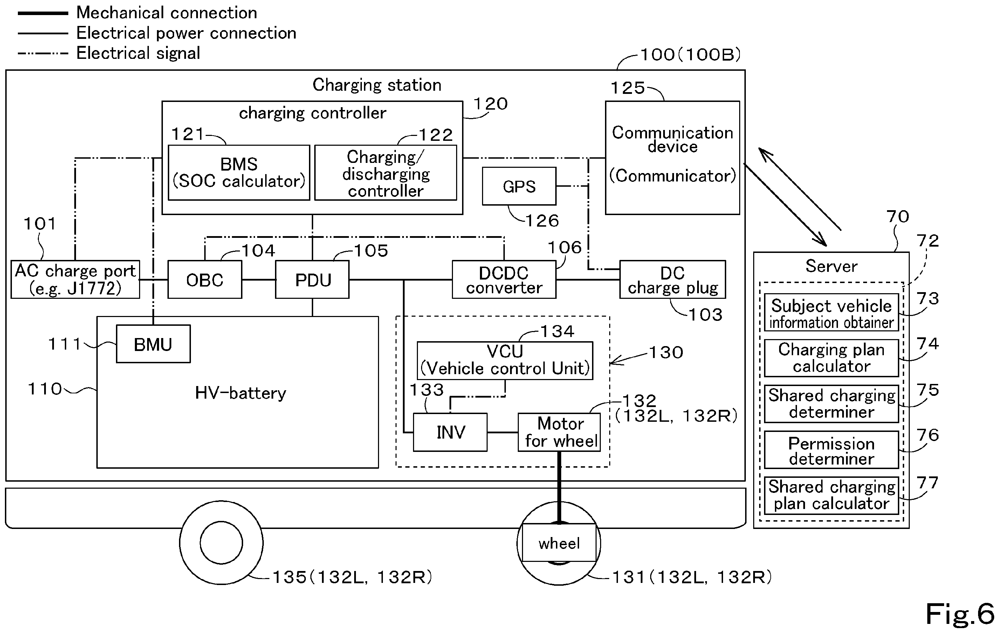

The charging station 100 is a charger that charges the electric vehicle 1. The charging station 100 includes an energy storage system (ESS), and is capable of temporarily storing electricity and supplying electricity when necessary. As illustrated in FIG. 1, the charging station 100 is, for example, a portable charging station 100A. The portable charging station 100A can be towed or loaded and transported by a transport vehicle. The transport vehicle may be an electric transport vehicle or a non-electric transport vehicle. The electric transport vehicle is a vehicle of an electric type, and may be, for example, an electric tractor, an electric truck, or the like. The non-electric transport vehicle is, for example, a vehicle of a non-electric type such as a gasoline vehicle or a diesel vehicle, and may be, for example, a tractor, a truck, or the like whose prime mover 4 is an engine. The transport vehicle may be a subject vehicle 11, instead. The charging station 100 is not limited to a portable type illustrated in FIG. 1, and may be of a mobile type as illustrated in FIG. 6, which will be referred to later.

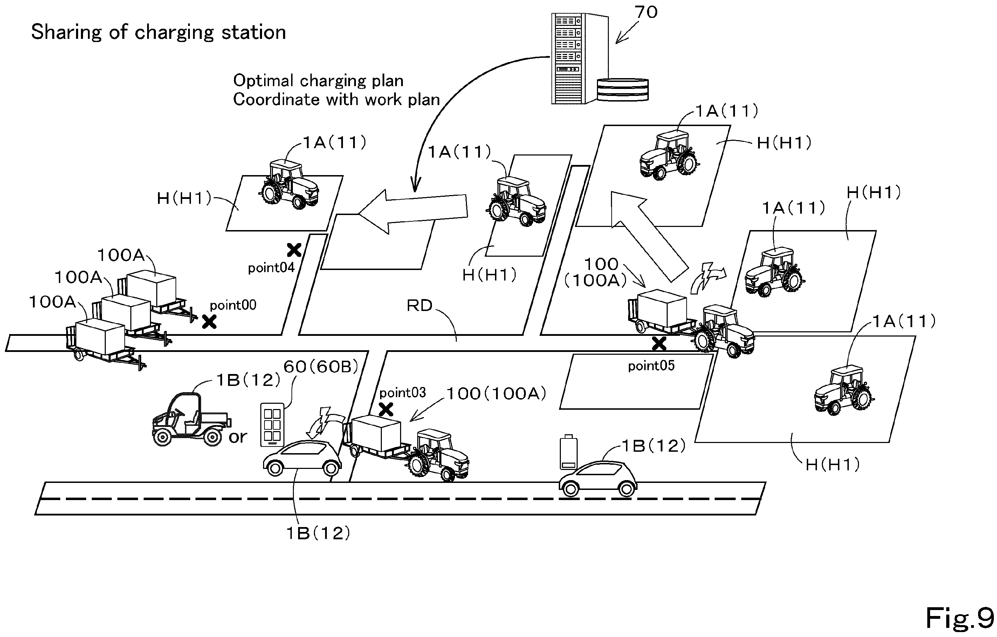

For example, a manager (e.g., an owner) of agricultural fields H1 illustrated in FIG. 9, which will be referred to later, owns the charging station 100. The manager is, for example, an owner, a farmer, or another person who owns or manages the agricultural fields H1, but is not limited to these. The manager of the agricultural fields H1 generates a work plan WP for the agricultural fields H1 in advance using the subject vehicle 11 or a terminal 60, which will be described later, and the server 70.

The work plan WP for the agricultural fields H1 includes work sites H (agricultural fields H1 or the like) illustrated in FIG. 9 on which the electric vehicle 1 performs work, travel routes from a current position of the electric vehicle 1 to the work sites H, and work content of the electric vehicle 1 in the work sites H. In the case of rice planting, for example, the work content includes tasks such as soil preparation, bundling, cultivation, sowing, fertilization, rice planting, puddling, furrowing, weeding, additional fertilization, and harvesting.

The server 70 manages the charging station 100. For example, the server 70 is configured or programmed to recognize a position of the charging station 100 and control charging and discharging of the charging station 100 to manage the charging station 100.

As illustrated in FIG. 1, the server 70 and the plurality of electric vehicles 1 are communicable with each other over an information communication network such as the Internet. The plurality of electric vehicles 1 may be communicable with the charging station 100. The sharing system SY of the charging station 100 only needs to be communicable with the plurality of electric vehicles 1, and may or may not include the plurality of electric vehicles 1 as components.

As illustrated in FIG. 1, the sharing system SY of the charging station 100 may also include the terminal 60. The terminal 60 is, for example, a mobile terminal such as a smartphone, a tablet, a PDA, or a laptop personal computer.

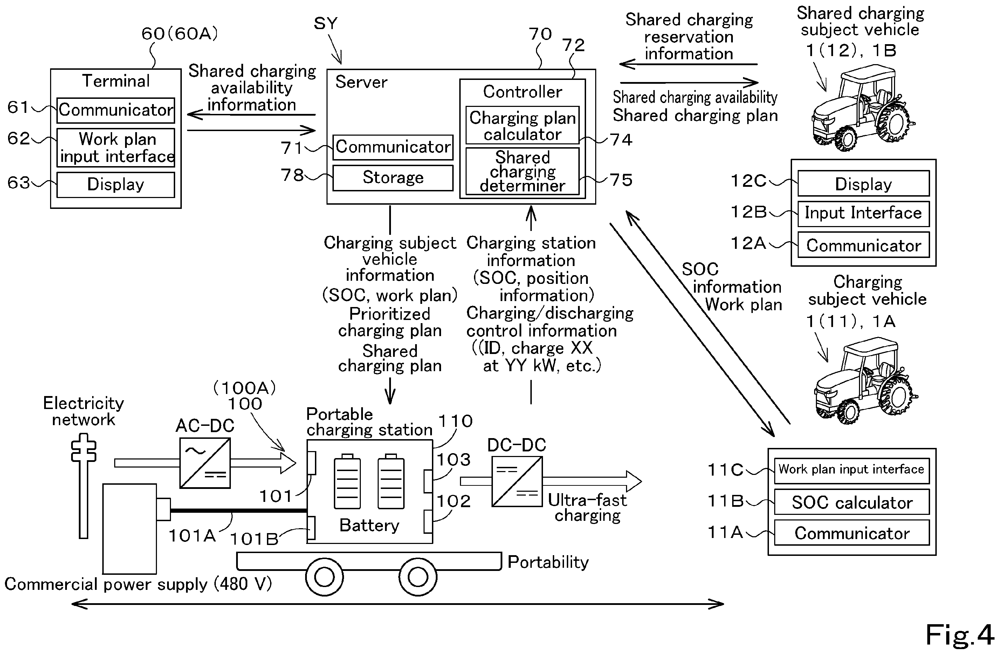

Here, each component of the sharing system SY of the charging station 100 according to an example embodiment will be described with reference to FIG. 4. FIG. 4 is a block diagram illustrating the sharing system SY of the charging station 100 according to an example embodiment.

The server 70 is a stationary computer installed for, for example, a farmer, a farming company, an agricultural machinery manufacturer, a company that provides agricultural services, or the like. The server 70 may be a mobile computer that can be carried by a manager, an operator, or another person.

The server 70 includes a communicator 71 communicable with the charging station 100 and the electric vehicles 1. The communicator 71 is a communication module that performs direct communication or indirect communication with the charging station 100 and the electric vehicles 1, and capable of performing wireless communication through, for example, Wireless Fidelity (Wi-Fi; registered trademark) based on an IEEE 802.11 series, which is a communication standard, Bluetooth (registered trademark) low energy (BLE), low power, wide area (LPWA), low-power wide-area network (LPWAN), or the like. The communicator 71 is capable of performing the wireless communication over, for example, a cellular network, a data communication network, or the like.

The server 70 includes a controller 72. The controller 72 includes electric/electronic circuits, a processor, a memory, and the like. The processor is, for example, a central processing unit (CPU), a graphics processing unit (GPU), a digital signal processor (DSP), a field-programmable gate array (FPGA), an application-specific integrated circuit (ASIC), or the like. The server 70 is configured or programmed to function as the controller 72 when the processor executes a control program. The controller 72 may be configured or programmed to perform various types of calculation and control including, for example, a function of generating the work plan WP for the agricultural fields H1, a function of generating a charging plan CP according to the work plan WP, and a function of controlling the charging station 100 in accordance with the charging plan CP.

The server 70 includes a storage 78 storing various types of information, programs, and the like. The storage 78 is a nonvolatile storage, and is, for example, a hard disk drive (HDD), a solid-state drive (SSD), or the like. The storage 78 stores a setting value indicating whether shared charging by the charging station 100 is permitted or not. If the server 70 receives permission information from a first terminal 60A, which will be described later, the server 70 sets the setting value to "permitted", and if no permission information has been received (or non-permission information has been received), sets the setting value to "not permitted".

A storage (e.g., an HDD, an SSD, etc.) of the charging station 100, not the storage 78 of the server 70, may store the setting value indicating whether the shared charging by the charging station 100 is permitted or not. In this case, the server 70 may check the setting value in the charging station 100 and determine whether the shared charging is permitted or not (prohibited). Alternatively, the charging station 100 may check the setting value and determine whether the shared charging is permitted or not (prohibited).

As illustrated in FIGS. 1 and 4, the electric vehicles 1 are roughly divided into subject vehicles 11 and external vehicles 12. Each subject vehicle 11 is a vehicle of an electric type that works in agricultural fields H1 based on a work plan WP for the agricultural fields H1 generated in advance and that is charged by the charging station 100 based on a charging plan CP according to the work plan WP. That is, the subject vehicle 11 is a charging subject vehicle 1A, which is included in the work plan WP for the agricultural fields H1 and charged in accordance with the charging plan CP.

Each external vehicle 12, on the other hand, is a stranger's vehicle of an electric type that is not included in a work plan WP for agricultural fields H1, and may be an electric working vehicle or an electric automobile other than an electric working vehicle. Although the external vehicle 12 is a vehicle unrelated to a work plan WP for agricultural fields H1, but can be a shared charging subject vehicle 1B to be subjected to the shared charging by the charging station 100 if a condition of the shared charging is satisfied. The above-described charging of the subject vehicle 11 will be referred to as prioritized charging. The prioritized charging refers to the charging of the subject vehicle 11 by the charging station 100 in a work plan WP including work by the subject vehicle 11. In other words, the prioritized charging refers to the charging of the subject vehicle 11 by the charging station 100 based on a charging plan that ensures the charging of the subject vehicle 11. The shared charging refers to the charging of the external vehicle 12 (shared charging subject vehicle 1B) other than the subject vehicle 11 by the charging station 100.

As illustrated in FIG. 4, the charging subject vehicle 1A (subject vehicle 11) includes a communicator 11A. The communicator 11A is a communication module that performs direct communication or indirect communication with the server 70, and capable of performing wireless communication through, for example, Wi-Fi (registered trademark) based on the IEEE 802.11 series, which is a communication standard, BLE, LPWA, LPWAN, or the like. The communicator 11A is capable of performing the wireless communication over, for example, a cellular network, a data communication network, or the like.

The charging subject vehicle 1A (subject vehicle 11) includes a state-of-charge (SOC) calculator 11B. The SOC calculator 11B is configured or programmed to calculate a SOC, that is, a charging state or a charging level, of the battery BT. For example, the SOC is 100% in a fully charged state, and 0% in a fully discharged state.

The charging subject vehicle 1A (subject vehicle 11) includes a work plan input interface 11C. The manager or the operator, for example, inputs information regarding the work plan WP for the agricultural fields H1 using the work plan input interface 11C. As the work plan input interface 11C, for example, one of various input interfaces including a keyboard, a mouse, an audio input interface, and a touch panel provided on a display screen of a display may be used.

The communicator 11A of the charging subject vehicle 1A transmits, to the server 70, SOC information indicating the SOC calculated by the SOC calculator 11B and information regarding the work plan WP for the agricultural fields H1 input using the work plan input interface 11C.

The controller 72 of the server 70 transmits, to the charging station 100 using the communicator 71, charging subject vehicle information (the SOC and the work plan WP) and a prioritized charging plan (i.e., the charging plan CP based on the work plan WP) based on the SOC information and the information (work plan WP) regarding the work plan WP for the agricultural fields H1 from the charging subject vehicle 1A.

As illustrated in FIG. 4, the charging station 100 includes, for example, a battery 110. For example, the battery 110 is a high-voltage (HV) battery, but is not limited to this. The charging station 100 includes an alternating current (AC) charging port 101 to charge the battery 110. The AC charging port 101 is, for example, a port (charging port) compliant with a "J1772" standard for normal charging. In the charging station 100, AC power from an AC power network, that is, a commercial power supply, is input to the AC charging port 101 through charging cable, an input AC voltage is converted into a direct current (DC) voltage suitable for the battery 110, and the battery 110 is charged.

Alternatively, as illustrated in FIG. 4, the charging station 100 may include a power supply cable 101A and charge the battery 110 when the power supply cable 101A is connected to a three-phase 480V commercial power supply or the like. When the built-in power supply cable 101A is directly connected to the commercial power supply in this manner, electricity can be obtained from the three-phase 480 V commercial power supply, and the battery 110 can be charged with electricity (e.g., 100 kW) larger than when "J1772" mentioned above is used (charging with about 10 kW per hour). That is, charging of 100 kWh is possible. The charging station 100 may include a DC charging port 100B, and charge the battery 110 by performing high-voltage charging from the DC charging port 101B. The charging station 100 may include one or more of the AC charging port 101, the power supply cable 100A, and the DC charging port 101B.

The charging station 100 includes a low-voltage power output 102 and a high-voltage power output 103. The low-voltage power output 102 is an AC charging plug provided at an end of a low-voltage connection cable, and is used to output (supply) AC power to the electric vehicles 1 and normally charge the electric vehicles 1. The low-voltage power output 102 is compliant with, for example, the "J1772" standard for normal charging. The low-voltage power output 102 may be an output socket, instead.

The high-voltage power output 103 is a DC charging plug provided at an end of a high-voltage connection cable, and is used to output (supply) DC power to the electric vehicles 1 and ultra-fast charge the electric vehicles 1. The high-voltage power output 103 is compliant with, for example, a "CHAdeMO (registered trademark)" or "combined charging system (CCS)" standard for ultra-fast charging. The high-voltage power output 103 may be an output socket, instead.

The charging station 100 transmits charging station information including SOC information regarding the battery 110 and position information of the charging station 100 to the server 70. The charging station 100 transmits, to the server 70, charging/discharging control information including discharging information indicating that an electric vehicle 1 whose machine identifier (ID) (identification information) is "XX" is charged with "YY" kW (i.e., information regarding charging of the electric vehicles 1). The charging/discharging control information may include charging information regarding the charging station 100 (information regarding charging of the charging station 100 from a commercial power supply or the like).

As illustrated in FIG. 4, the shared charging subject vehicle 1B (external vehicle 12) includes a communicator 12A. The communicator 12A is a communication module that performs direct communication or indirect communication with the server 70, and performs wireless communication through, for example, Wi-Fi (registered trademark) based on the IEEE 802.11 series, which is a communication standard, BLE, LPWA, LPWAN, or the like. The communicator 12A is capable of performing the wireless communication over, for example, a cellular network, a data communication network, or the like.

The shared charging subject vehicle 1B (external vehicle 12) includes an input interface 12B and a display 12C. As the input interface 12B, for example, one of various input interfaces including a keyboard, a mouse, an audio input interface, and a touch panel provided on a display screen of the display 12C may be used. The display 12C is, for example, a display such as a liquid crystal display or an organic electroluminescent (EL) display. The input interface 12B is used to input shared charging reservation information including at least a shared charging reservation from a driver of the external vehicle 12. The shared charging reservation information may include a desired amount of electricity to be supplied through shared charging and time information indicating a charging period.

The communicator 12A of the shared charging subject vehicle 1B (external vehicle 12) transmits the shared charging reservation information input to the input interface 12B to the server 70.

The controller 72 of the server 70 generates a shared charging plan SP based on the shared charging reservation information from the shared charging subject vehicle 1B, and transmits shared charging availability information indicating whether the shared charging plan SP is feasible or not without affecting the work plan WP to the terminal 60 and the shared charging subject vehicle 1B using the communicator 71. If determining that the shared charging plan SP is feasible, the controller 72 of the server 70 transmits the shared charging plan SP to the charging station 100 and the shared charging subject vehicle 1B using the communicator 71.

As illustrated in FIG. 4, the terminal 60 includes a communicator 61. The communicator 61 is a communication module that performs direct communication or indirect communication with the server 70, and performs wireless communication through, for example, Wi-Fi (registered trademark) based on the IEEE 802.11 series, which is a communication standard, BLE, LPWA, LPWAN, or the like. The communicator 61 is capable of performing the wireless communication over, for example, a cellular network, a data communication network, or the like.

The terminal 60 includes a work plan input interface 62 and a display 63. The work plan input interface 62 is used to input, for example, information regarding the work plan WP for the agricultural fields H1 from the manager or the operator. As the work plan input interface 62, for example, one of various input interfaces including a keyboard, a mouse, an audio input interface, and a touch panel provided on a display screen of the display 63 may be used. The display 63 is, for example, a display such as a liquid crystal display or an organic EL display.

The communicator 61 of the terminal 60 transmits the work plan WP input to the work plan input interface 62 to the server 70.

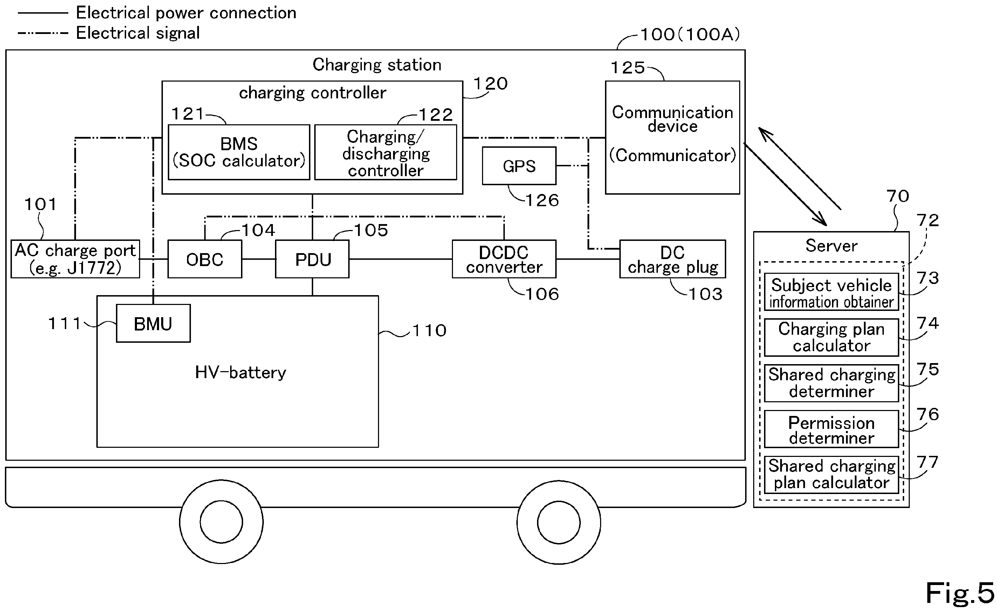

FIG. 5 is a block diagram illustrating components of the server 70 and the portable charging station 100A.

As illustrated in FIG. 5, the charging station 100 includes the battery 110. The battery 110 is provided with a battery management unit (BMU) 111. Although the BMU 111 is provided in the corresponding battery 110, the BMU 111 may be provided outside the battery 110, instead.

The BMU 111 is configured or programmed to monitor and control the battery 110. Specifically, the BMU 111 is configured or programmed to control switching of a relay provided inside the battery 110 to control a start and a stop of supply of electricity from the battery 110 to the power distribution unit (PDU) 105. The BMU 111 also monitors a state of the battery 110. For example, the BMU 111 detects a temperature, a voltage, and a current of the battery 110, a terminal voltage of internal cells, or the like.

The BMU 111 also detects a remaining level of the battery 110 using, for example, a voltage measurement method based on the terminal voltage of the cells inside the battery 110. A method for detecting the remaining level of the battery 110 is not limited to the voltage measurement method, and one of other methods including a Coulomb counting method, a battery cell modeling method, and an impedance track method may be used. A level detector that detects the remaining level of the battery 110 may also be provided separately from the BMU 111.

As illustrated in FIG. 5, the charging station 100 includes a charging controller 120, an on-board battery charger (OBC) 104, the PDU 105, and a DC-DC converter 106. The OBC 104 is a device used to charge the battery 110. The OBC 104 converts an AC from the AC charging port 101 into a DC necessary for the battery 110, and outputs the DC to the PDU 105.

When the battery 110 is charged, the PDU 105 charges the battery 110 with electricity distributed based on charging control by the charging controller 120, and when the battery 110 is discharged, the PDU 105 distributes electricity from the battery 110 based on discharging control by the charging controller 120 and outputs the electricity to the DC-DC converter 106. The DC-DC converter 106 converts an input voltage into a predetermined output voltage and outputs the predetermined output voltage to the high-voltage power output 103.

The charging controller 120 includes a battery management system (BMS) 121 and a charging/discharging controller 122. The BMS 121 includes a SOC calculator. The charging/discharging controller 122 is configured or programmed to control the AC charging port 101, the BMU 111 of the battery 110, the OBC 104, the PDU 105, the DC-DC converter 106, the low-voltage power output 102, and the high-voltage power output 103.

As illustrated in FIG. 5, the charging station 100 includes a communicator 125. The communicator 125 is a communication module that performs direct communication or indirect communication with at least the server 70 among the server 70, the electric vehicles 1, and the terminal 60, and capable of performing wireless communication through, for example, Wi-Fi (registered trademark) based on the IEEE 802.11 series, which is a communication standard, BLE, LPWA, LPWAN, or the like. The communicator 125 is capable of performing the wireless communication over, for example, a cellular network, a data communication network, or the like.

The charging station 100 includes a positioning device 126 that detects a position thereof. The positioning device 126 detects the position thereof (latitude and longitude) based on data from positioning satellites (positioning satellite system) such as a GPS or Michibiki. The positioning device 126 may include inertial devices such as an acceleration sensor that detects acceleration and a gyroscope sensor that detects angular velocity, and may correct the position using the acceleration and the angular velocity detected by the inertial devices, other correction signals, or the like.

Solid lines in FIG. 5 indicate electricity connection lines (electricity lines). The AC charging port 101, the OBC 104, the PDU 105, the battery 110, the DC-DC converter 106, and the high-voltage power output 103 are electrically connected to one another. Dash-dot-dot lines in FIG. 5 indicate electrical signal lines (signal lines). The charging controller 120, the AC charging port 101, the OBC 104, the PDU 105, the battery 110 (especially the BMU 111), the DC-DC converter 106, the high-voltage power output 103, the communicator 125, and the positioning device 126 are electrically connected to one another.

As illustrated in FIG. 4, the sharing system SY of the charging station 100 includes a subject vehicle information obtainer 73, a charging plan calculator 74, and a shared charging determiner 75. Specifically, the server 70 includes the subject vehicle information obtainer 73, the charging plan calculator 74, and the shared charging determiner 75. The controller 72 is configured or programmed to function as the subject vehicle information obtainer 73, the charging plan calculator 74, and the shared charging determiner 75 by executing a control program using the processor.

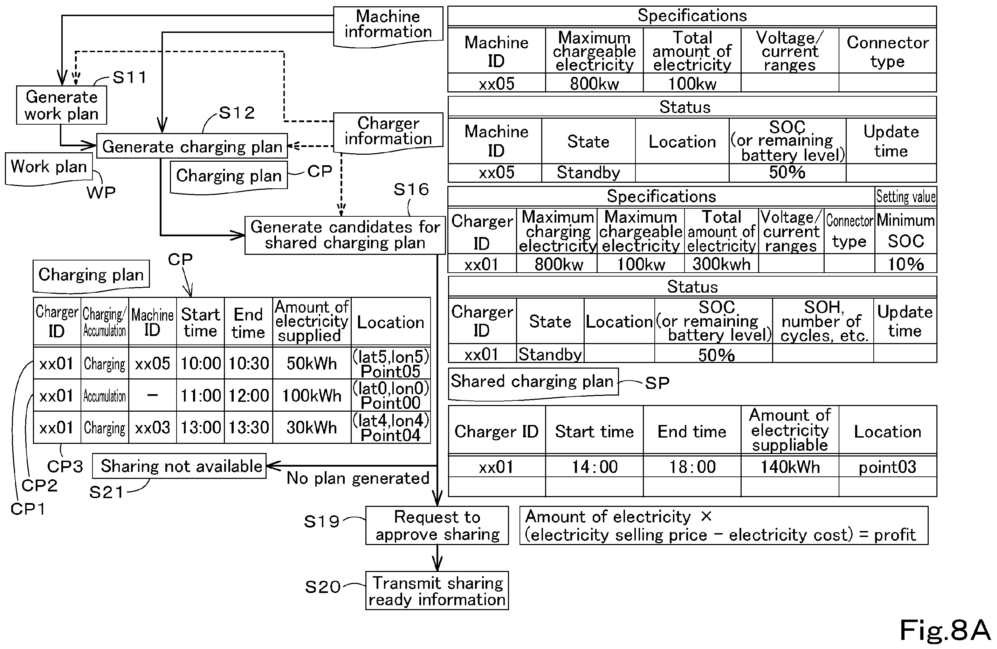

The subject vehicle information obtainer 73 obtains vehicle information regarding an electric vehicle 1 included in the work plan WP for the agricultural fields H1, that is, the charging subject vehicle 1A (subject vehicle 11). For example, as illustrated in FIG. 8A referred to later, the vehicle information includes specification information and status information regarding the subject vehicle 11. For example, the specification information includes a machine ID (identification information), maximum chargeable electricity, a total amount of electricity, voltage and current ranges, and a connector type of the subject vehicle 11. The status information includes a machine ID (identification information) of the subject vehicle 11, a state, a location, a SOC (or a remaining battery level), and an update time of the subject vehicle 11.

The charging plan calculator 74 calculates the charging plan CP that ensures charging of the subject vehicle 11 by the charging station 100 based on the amount of electricity that the charging station 100 has, based on the work plan WP including work to be done by the subject vehicle 11, which is the electric vehicle 1, and based on the remaining battery level of the subject vehicle 11.

The shared charging determiner 75 determines, based on the amount of electricity that the charging station 100 has and based on the charging plan CP, whether shared charging, which is charging of an external vehicle 12 other than the subject vehicle 11 by the charging station 100, is available or not.

The charging plan CP calculated by the charging plan calculator 74 is prioritized over the determination by the shared charging determiner 75 that the shared charging is available.

The shared charging determiner 75 determines that the shared charging is available when a value obtained by subtracting the amount of electricity to be consumed by charging the subject vehicle 11 from the amount of electricity that the charging station 100 has is equal to or more than a predetermined value (e.g., the amount of electricity of the SOC (20%)).

The sharing system SY of the charging station 100 includes a permission determiner 76 and a shared charging plan calculator 77. Specifically, the server 70 includes the permission determiner 76 and the shared charging plan calculator 77. The controller 72 is configured or programmed to function as the permission determiner 76 and the shared charging plan calculator 77 by executing a control program using the processor.

The permission determiner 76 determines that the manager of the charging station 100 has permitted the shared charging. For example, if the setting value stored in the storage 78 of the server 70 (i.e., the setting value indicating whether the shared charging by the charging station 100 is permitted or not) indicates that the shared charging is permitted, the permission determiner 76 determines that the manager of the charging station 100 has permitted the shared charging. If the shared charging determiner 75 determines that the shared charging is available and the permission determiner 76 determines that the shared charging is permitted, the shared charging plan calculator 77 generates the shared charging plan SP to charge the external vehicle 12.

The shared charging plan calculator 77 calculates a time-of-day during which the shared charging is permitted and an upper limit of the amount of electricity supplied by the shared charging based on the amount of electricity to be consumed by charging the subject vehicle (i.e., charging of the charging subject vehicle 1A) and charging time-of-day information included in the charging plan CP.

The charging station 100 is the portable charging station 100A. The shared charging plan calculator 77 calculates (i.e., identifies) a shared charging position at which the shared charging is to be performed. The shared charging plan calculator 77 then calculates the time-of-day during which the shared charging is permitted based on a time taken to move from a prioritized charging position to the shared charging position and the charging time-of-day information relating to charging of the subject vehicle (charging of the charging subject vehicle 1A), the prioritized charging position being included in the charging plan CP and being a position at which the subject vehicle 11 is to be charged.

The server 70 obtains a permitted state of the shared charging of the charging station 100, and transmits position information of the charging station 100 for which the shared charging is permitted and the shared charging plan SP to the external vehicle 12.

As illustrated in FIG. 4, the charging station 100 includes the low-voltage power output 102 and the high-voltage power output 103, and determines, based on the time-of-day during which the shared charging is permitted, which of the low-voltage power output 102 and the high-voltage power output 103 to use to perform the permitted shared charging.

As illustrated in FIG. 4, the server 70 transmits the position information of the charging station 100 for which the shared charging is permitted and the shared charging plan SP to the terminal 60.

The terminal 60 is, for example, a first terminal 60A operable by the manager of the charging station 100. The first terminal 60A may be owned by the driver of the subject vehicle 11 (charging subject vehicle 1A) or the operator in one of the agricultural fields H1. A plurality of first terminals 60A may be provided, and the plurality of first terminals 60A may be owned by a plurality of persons including the manager, the operator, and the driver.

The terminal 60 may also include a second terminal 60B other than the first terminal 60A provided for the external vehicle 12.

When the second terminal 60B receives a request for a reservation of the shared charging, the second terminal 60B transmits, to the shared charging determiner 75, reservation information (shared charging reservation information) indicating that the reservation of the shared charging is requested. The shared charging determiner 75 transmits, to the second terminal 60B, a result of the determination of whether the shared charging for which the reservation is requested is available or not. The second terminal 60B displays the result of the determination of whether the shared charging is available or not.

The charging station 100 may be a mobile charging station 100B, instead. FIG. 6 is a block diagram illustrating each of components of the server 70 and the mobile charging station 100B. As illustrated in FIG. 6, the charging station 100 is the mobile charging station 100B powered by electricity thereof to travel alone. The mobile charging station 100B illustrated in FIG. 6 is different from the portable charging station 100A illustrated in FIG. 5 in that the mobile charging station 100B includes a self-propulsion mechanism 130.

As illustrated in FIG. 6, the self-propulsion mechanism 130 of the mobile charging station 100B includes left and right drive wheels 131 (a left drive wheel 131L and a right drive wheel 131R), left and right electric motors 132 (a left electric motor 132L and a right electric motor 132R) that drive the left and right drive wheels 131, respectively, an inverter 133 that drives the left and right electric motors 132, a vehicle control unit (VCU) 134 configured or programmed to control the inverter 133, and left and right driven wheels 135 (a left driven wheel 135L and a right driven wheel 135R).

Solid lines in FIG. 6 indicate electricity connection lines (electricity lines). In FIG. 6, the AC charging port 101, the OBC 104, the PDU 105, the battery 110, the inverter 133, the DC-DC converter 106, and the high-voltage power output 103 are electrically connected to one another. Dash-dot-dot lines in FIG. 6 indicate electrical signal lines (signal lines). The charging controller 120, the AC charging port 101, the OBC 104, the PDU 105, the battery 110 (especially the BMU 111), the DC-DC converter 106, the VCU 134, the inverter 133, the high-voltage power output 103, the communicator 125, and the positioning device 126 are electrically connected to one another.

The mobile charging station 100B includes an autonomous driving controller, for example, and is configured or programmed to, using the autonomous driving controller, autonomously drive along a predetermined driving route or autonomously drive while monitoring a surrounding environment and generating an optimal driving route. The driving route includes a route connecting a storage location such as a barn or a warehouse (a location "point00" in FIG. 9, which will be referred to later), a prioritized charging position (a location "point04" or "point05" in FIG. 9) at which the mobile charging station 100B charges the subject vehicle 11, a shared charging position (a location "point03" in FIG. 9) at which the mobile charging station 100B charges the external vehicle 12, and the like to one another. The mobile charging station 100B may be driven manually by a driver on board, or operated remotely through remote control.

The shared charging plan calculator 77 illustrated in FIG. 6 calculates an upper limit of the amount of electricity supplied by the shared charging based on the amount of electricity consumed to move from the prioritized charging position (the location "point04" in FIG. 9) to the shared charging position (the location "point03" in FIG. 9), the prioritized charging position being a position at which the subject vehicle 11 is to be charged and being included in the charging plan CP, the shared charging position being a position at which the shared charging is to be performed on the external vehicle 12.

Alternatively, the shared charging plan calculator 77 illustrated in FIG. 6 may calculate the upper limit of the amount of electricity supplied by the shared charging based on the amount of electricity consumed to move from the shared charging position (the location "point03" in FIG. 9) to the storage location of the mobile charging station 100B (the location "point00" in FIG. 9) set by the manager in advance. That is, the shared charging plan calculator 77 calculates the upper limit of the amount of electricity supplied by the shared charging based on the amount of electricity consumed to move from the prioritized charging position to the shared charging position and the amount of electricity consumed to move from the shared charging position to the storage location.

If it is determined that the shared charging is available, the mobile charging station 100B autonomously drives from the prioritized charging position (the location "point04" in FIG. 9) included in the charging plan CP to the storage location thereof (the location "point00" in FIG. 9) via the shared charging position (the location "point03" in FIG. 9) after an end of the shared charging while holding at least the amount of electricity consumed to move from the shared charging position (the location "point03" in FIG. 9) to the storage location (the location "point00" in FIG. 9).

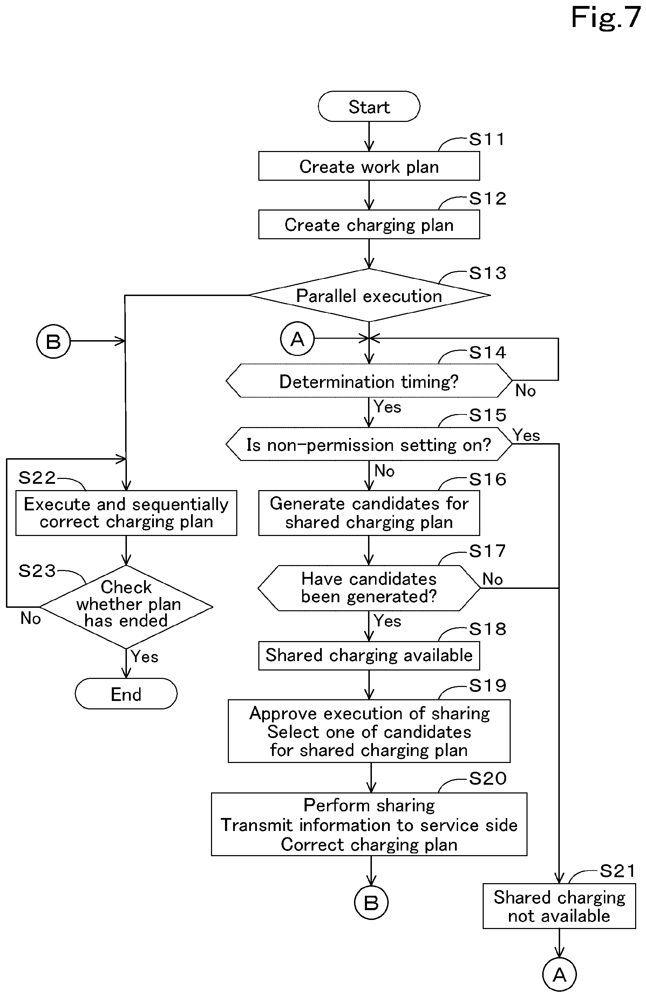

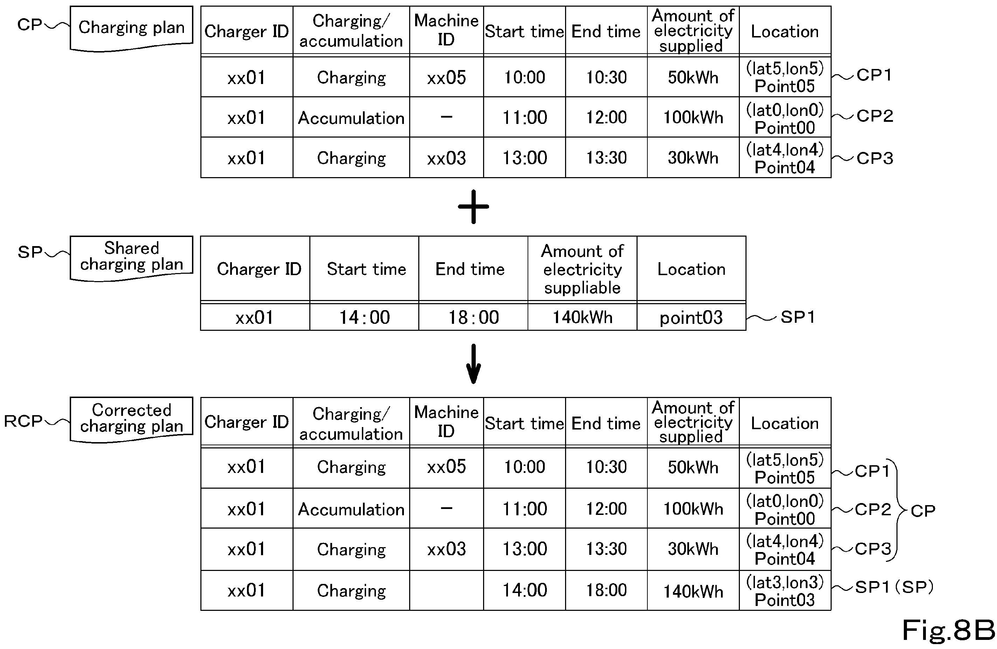

Now, a process performed by the sharing system SY of the charging station 100 will be described with reference to FIGS. 7 to 9. FIG. 7 is a flowchart illustrating a process for sharing the charging station 100 performed by the server 70. FIG. 8A is a diagram illustrating a procedure for generating the work plan WP, the charging plan CP, and the shared charging plan SP. FIG. 8B is a diagram illustrating an example of the work plan WP, the charging plan CP, and the shared charging plan SP. FIG. 9 is diagram illustrating an example of sharing of the charging station 100.

As illustrated in FIG. 7, the server 70 generates the work plan WP for the agricultural fields H1 (S11). Specifically, information regarding the work plan WP for the agricultural fields H1 is input in advance to at least the work plan input interface 11C of the charging subject vehicle 1A or the work plan input interface 62 of the first terminal 60A. The charging subject vehicle 1A (subject vehicle 11) transmits vehicle information thereof (machine information illustrated in FIG. 8A) to the server 70. As illustrated in FIG. 8A, the server 70 (controller 72) generates the work plan WP for the agricultural fields H1 based on the information regarding the work plan WP for the agricultural fields H1 from the charging subject vehicle 1A and/or the terminal 60 and the vehicle information (the machine information illustrated in FIG. 8A) regarding the charging subject vehicle 1A (subject vehicle 11) to work in the agricultural fields H1 (S11).

As illustrated in FIG. 8A, the machine information is the vehicle information regarding the charging subject vehicle 1A (subject vehicle 11) and includes specification information and status information regarding the subject vehicle 11. In FIG. 8A, the specification information in the machine information includes a machine ID (e.g., "xx05"), maximum chargeable electricity (i.e., maximum input electricity of, for example, 800 kW), a total amount of electricity (e.g., 100 kWh), voltage and current ranges, and a connector type of the subject vehicle 11. The status information in the machine information includes the machine ID (e.g., "xx05") of the subject vehicle 11 and a state (e.g., standby), a location, a SOC (e.g., 50%), and an update time of the subject vehicle 11.

As illustrated in FIG. 7, the server 70 (controller 72) generates the charging plan CP (S12). More specifically, as illustrated in FIG. 8A, the server 70 (controller 72) generates the charging plan CP based on charger information (information regarding the charging station 100), the work plan WP for the agricultural fields H1, and the machine information (the vehicle information regarding the charging subject vehicle 1A) (S12).

As illustrated in FIG. 8A, the charger information includes the specification information, setting values, and the status information regarding the charging station 100. For example, the specification information in the charger information includes a charger ID (identification information: "xx01" in FIG. 8A), maximum charging electricity (i.e., maximum input electricity of, for example, 800 kW), maximum chargeable electricity (i.e., maximum input electricity of, for example, 100 kW), a total amount of electricity (e.g., 300 kWh), voltage and current ranges, and a connector type of the charging station 100. The setting values include minimum SOC (e.g., 10%). The status information in the charger information includes a state, a location, a SOC (or a remaining battery level: "50%" in FIG. 8A), a state of heath (SOH), the number of cycles, and an update time of the charging station 100. The SOH refers to an overall state of the battery 110 compared with an ideal state, and is represented in percentage. If the SOH is 100%, the battery 110 is in a perfect state, and a lower percentage indicates greater degradation.

Specifically, the charging plan calculator 74 calculates a charging plan CP that ensures charging of the subject vehicle 11 by the charging station 100 based on the amount of electricity (the total amount of electricity in the charger information in FIG. 8A) that the charging station 100 has, the work plan WP including work to be done by the charging subject vehicle 1A (subject vehicle 11), and the remaining battery level (the SOC in the machine information in FIG. 8A) of the subject vehicle 11 (S12). In FIG. 8A, a charging plan CP including first to third plans CP1 to CP3 is calculated.

For example, the work plan WP includes work to be done by the subject vehicle 11 with the machine ID (e.g., "xx05") in the agricultural fields H1. The charging plan calculator 74, therefore, generates a charging plan CP including the first plan CP1 to charge the subject vehicle 11 with the machine ID (e.g., "xx05") as illustrated in FIG. 8A.

In the first plan CP1, for example, the charger ID of the charging station 100 is "xx01", a "charging/accumulation" item of the charging station 100 is "charging", the machine ID of the charging subject vehicle 1A is "xx05", a start time is "10:00", an end time is "10:30", the amount of electricity to be supplied is "50 kWh", and the location is "point05" in FIG. 9 (i.e., latitude and longitude (lat5, lon5)). That is, the first plan CP1 is a plan in which the charging station 100 charges the subject vehicle 11 having the machine ID (e.g., "xx05") with the amount of electricity to be supplied (100 kW × 0.5 h = 50 kWh) at the location "point05" during the time-of-day of 10:00 to 10:30.

The charging plan calculator 74 calculates (estimates) that, when the first plan CP1 is executed, the total amount of electricity of the charging station 100 of 300 kWh will be consumed by the amount of electricity to be supplied in the first plan CP1 (100 kW × 0.5 h = 50 kWh), and the SOC of the charging station 100 will decrease from 50.0% to 33% and fall below a charging recommended value (e.g., 35%). The charging plan calculator 74, therefore, generates a charging plan CP including the second plan CP2 in which the charging station 100 is charged using a commercial power supply.

In the second plan CP2, the charger ID of the charging station 100 is "xx01", the "charging/accumulation" item of the charging station 100 is "accumulation", the machine ID is "-" (i.e., there is no charging subject vehicle 1A), the start time is "11:00", the end time is "12:00", the amount of electricity to be supplied is "100 kWh", and the location is "point00" in FIG. 9 (i.e., latitude and longitude (lat0, lon0)). For example, when "J1772" is used, charging of about 10 kW per hour is performed, but since the charging station 100 charges the battery 110 by connecting the power supply cable 101A to a 480 V commercial power supply as illustrated in FIG. 4, charging of 100 kWh can be performed. The location (position) "point00" in FIG. 9 is the storage location of the charging station 100. At this storage location, the battery 110 can be charged with AC power from the commercial power supply. That is, the second plan CP2 is a plan in which the charging station 100 having the charger ID of "xx01" is charged by the commercial power supply with the amount of electricity to be supplied (100 kW × 1 h = 100 kWh) at the location "point00" during the time-of-day of 11:00 to 12:00. As illustrated in FIG. 8A, the charging plan calculator 74 generates a charging plan CP including the first plan CP1 and the second plan CP2.

For example, the work plan WP includes, after the second plan CP2, work to be done by the charging subject vehicle 1A having the machine ID of "xx03" in one of the agricultural fields H1. The charging plan calculator 74, therefore, generates a charging plan CP including, as illustrated in FIG. 8A, the third plan CP3 to charge the subject vehicle 11 having the machine ID (e.g., "xx03").

In the third plan CP3, the charger ID of the charging station 100 is "xx01", the "charging/accumulation" item of the charging station 100 is "charging", the machine ID of the charging subject vehicle 1A is "xx03", the start time is "13:00", the end time is "13:00", the amount of electricity to be supplied is "30 kWh", and the location is "point04" in FIG. 9 (i.e., latitude and longitude (lat4, lon4)). That is, the third plan CP3 is a plan in which the charging station 100 charges the subject vehicle 11 having the machine ID (e.g., "xx03") with the amount of electricity to be supplied (60 kW × 0.5 h = 30 kWh) at the location "point04" during the time-of-day of 13:00 to 13:30. As illustrated in FIG. 8A, the charging plan calculator 74 generates a charging plan CP including the first to third plans CP1 to CP3.

As illustrated in FIG. 7, the server 70 (controller 72) performs parallel processing (S13). In the parallel processing, processing for executing and correcting the charging plan CP (S22) and processing relating to the shared charging plan SP (S14 to S21) are simultaneously performed.

The server 70 (controller 72) determines whether it is a determination timing (S14). The determination timing may be a timing based on a predetermined interval, a manual timing, or a timing obtained by correcting the charging plan CP. The manual timing is, for example, a timing at which an operation instruction (e.g., inputting of shared charging reservation information) from the shared charging subject vehicle 1B or the second terminal 60B.

If it is not the determination timing (NO in S14), the server 70 (controller 72) returns to S 14. If it is the determination timing (YES in S14), on the other hand, the server 70 (controller 72) determines whether a non-permission setting is on (S15).

If the setting value of the storage 78 (i.e., the setting value indicating whether the shared charging by the charging station 100 is permitted or not) is "not permitted", the permission determiner 76 determines that the non-permission setting is on (YES in S15), determines that the shared charging is not permitted (S21), and returns to S14.

If the setting value (i.e., the setting value indicating whether the shared charging by the charging station 100 is permitted or not) in the storage 78 is "permitted", on the other hand, the permission determiner 76 determines that the non-permission setting is not on (i.e., determines that the shared charging is permitted) (NO in S15). If the permission determiner 76 has permitted the shared charging (NO in S15), the shared charging plan calculator 77 generates candidates for the shared charging plan SP to charge the external vehicle 12 (S16). Here, the charging plan CP by the charging plan calculator 74 is maintained as is, and is prioritized over the determination by the shared charging determiner 75 that the shared charging is available.

As illustrated in FIG. 8A, the shared charging determiner 75 determines that the shared charging is available when a value obtained by subtracting the amount of electricity consumed by the charging of the subject vehicle 11 (the sum of the power consumption in the first plan CP1 (50 kWh (= 100 kW × 0.5 h)) and the power consumption in the third plan CP3 (30 kWh (= 60 kW × 0.5 h))) from the amount of electricity that the charging station 100 currently has (i.e., the total amount of electricity of 300 kWh × SOC 50%) is equal to or more than a predetermined value (e.g., the amount of electricity of the SOC (20%)).

The shared charging plan calculator 77 calculates a time-of-day during which the shared charging is permitted and an upper limit of the amount of electricity to be supplied in the shared charging based on charging of the subject vehicle (charging of the charging subject vehicle 1A) and the charging time-of-day information included in the charging plan CP illustrated in FIG. 8A. The shared charging plan calculator 77 also identifies the shared charging position at which the external vehicle 12 is subjected to the shared charging, and calculates the time-of-day during which the shared charging is permitted based on the time taken to move from the prioritized charging position included in the charging plan CP to the shared charging position and the charging time-of-day information regarding the subject vehicle charging (charging of the charging subject vehicle 1A).

As illustrated in FIG. 8A, the total amount of electricity in the charger information is 300 kWh, the current SOC is 50% (150 kW = 300 kWh × 0.5), the power consumption in the first plan CP1 of the charging plan CP is 50 kWh (= 100 kW × 0.5 h), the power consumption in the second plan CP2 is -100 kWh (i.e., +100 kWh because of charging instead of consumption), and the power consumption in the third plan CP3 is 30 kWh (= 60 kWh × 0.5 h). The shared charging plan calculator 77 determines that the estimated total amount of electricity after the third plan CP3 is executed is 170 kW (= 150 kW - 50 kWh + 100 kWh - 30 kWh).

Since the charging time-of-day information of the charging plan CP illustrated in FIG. 8A indicates a time-of-day from the start time of the first plan CP1 to the end time of the third plan CP3, the shared charging plan calculator 77 determines that time after the end time of the third plan CP3 is free.

The shared charging plan calculator 77 calculates time taken to move from the prioritized charging position, which is a position at which the charging subject vehicle 1A is to be charged (e.g., the location in the third plan CP3 (the location "point04" in FIGS. 8A and 9)), to the shared charging position (the location "point03" in FIGS. 8A and 9). Specifically, the shared charging plan calculator 77 calculates the travel time (e.g., 0.5 hour) by dividing a travel distance from the location "point04" in FIG. 9 to the location "point03" on a road RD by a transport speed for transporting the portable charging station 100A (or a travel speed in the case of the mobile charging station 100B). For example, the shared charging plan calculator 77 calculates (determines) the travel distance based on a map including topographic information illustrated in FIG. 9, and calculates the travel time by dividing the travel distance by a predetermined transport speed or travel speed.

The shared charging plan calculator 77, therefore, determines the time-of-day during which the shared charging is permitted as 4 hours from a time (14:00) obtained by adding the travel time (0.5 hour) to the end time of the third plan CP3 (13:30) to 18:00 (a final time determined by the manager in advance). The shared charging plan calculator 77 also calculates the amount of electricity obtained by dividing 140 kW, which is the amount of electricity obtained by subtracting 30 kW (the amount of electricity corresponding to a minimum SOC (10%)) from 170 kW (the estimated amount of electricity), by 4 fours (14:00 to 18:00) as the amount of electricity suppliable of 35 kWh (= 140 kWh/4).

As illustrated in FIG. 8A, the shared charging plan calculator 77 generates a first share item SP1 in which a charger ID is "xx01", a start time is "14:00", an end time is "18:00", the amount of electricity to be supplied is 35 kWh, and a location is "point03" as a candidate for the shared charging plan SP (S16).

As illustrated in FIG. 7, the server 70 (controller 72) determines whether candidates for the shared charging plan SP have been generated (S17). For example, if the shared charging plan calculator 77 has created candidates for the shared charging plan SP, the server 70 (controller 72) determines that candidates have been generated (YES in S17), and determines that the shared charging is available (S18).

If the shared charging plan calculator 77 has not generated candidates for the shared charging plan SP, on the other hand, the server 70 (controller 72) determines that no candidates have been generated (NO in S17), determines that the shared charging is not available (S21), and returns to S14.

After S18, if the shared charging reservation information has been received from the external vehicle 12 or the second terminal 60B before the end time of the third plan CP3, the server 70 (controller 72) approves execution of sharing (S19). For example, the server 70 (controller 72) selects one of the candidates for the shared charging plan SP generated by the shared charging plan calculator 77.

In S19 of FIG. 8A, a profit of sharing may be calculated based on an expression "amount of electricity × (electricity selling price - electricity cost) = profit", and if the profit of the sharing is equal to or more than a certain value, the execution of the sharing may be approved.

The server 70 (controller 72) performs the sharing (S20). For example, the communicator 71 of the server 70 transmits information to a service side (e.g., the external vehicle 12 and/or the second terminal 60B), and corrects the charging plan CP. As illustrated in FIG. 8A, the communicator 71 transmits sharing ready information to the external vehicle 12 and/or the second terminal 60B (S20).

The server 70 (controller 72) executes and sequentially corrects the charging plan CP (S22). FIG. 8B is a diagram illustrating an example of the charging plan CP, the shared charging plan SP, and a corrected charging plan RCP. For example, as illustrated in FIG. 8B, the server 70 (controller 72) generates the corrected charging plan RCP by adding the shared charging plan SP to the charging plan CP. In the corrected charging plan RCP, the charging plan CP is maintained while adding the shared charging plan SP.

After S22, the server 70 (controller 72) checks whether the charging plan CP has ended (S23). If there is a corrected charging plan RCP, the server 70 (controller 72) checks whether the corrected charging plan RCP, not the charging plan CP, has ended (S23). For example, if a final plan item (the third plan CP3 in FIG. 8A in the case of the charging plan CP or the first share item SP1 in FIG. 8B in the case of the corrected charging plan RCP) has not ended, the server 70 (controller 72) determines that the plan has not entirely ended (NO in S23), and returns to S22.

If the final plan item (the third plan CP3 in FIG. 8A in the case of the charging plan CP or the first share item SP1 in FIG. 8B in the case of the corrected charging plan RCP) has ended, on the other hand, the server 70 (controller 72) determines that the plan has entirely ended (YES in S23), and ends the process.

Although the server 70 is configured or programmed to include the subject vehicle information obtainer 73, the charging plan calculator 74, the shared charging determiner 75, the permission determiner 76, and the shared charging plan calculator 77 in the above example embodiment, the charging station 100 may include these, instead.

Main characteristic items of and effects achieved by sharing systems SY in the above-described example embodiments and the like are as follows.

(Item A1) A sharing system SY to share a charging station 100 to charge electric vehicles 1, the sharing system SY including a charging plan calculator 74 configured or programmed to, based on an amount of electricity that the charging station 100 has, based on a work plan WP including work to be done by a subject vehicle 11 which is an electric vehicle 1, and based on a remaining battery level of the subject vehicle 11, calculate a charging plan CP to ensure charging of the subject vehicle 11 by the charging station 100, and a shared charging determiner 75 configured or programmed to, based on an amount of electricity that the charging station 100 has and based on the charging plan CP, determine whether shared charging is available or not, the shared charging including using the charging station 100 to charge an external vehicle 12 other than the subject vehicle 11.

With this configuration, the shared charging of the external vehicle 12 other than the subject vehicle 11 by the charging station 100 can be performed while ensuring the charging of the subject vehicle 11 by the charging station 100 using the charging plan CP and performing the work by the subject vehicle 11 as specified in the work plan WP. Thus, the charging station 100 can be shared and used by the external vehicle 12 outside the work plan WP, and effectively used outside the work plan WP.

(Item A2) The sharing system SY according to item A1, wherein the charging plan CP calculated by the charging plan calculator 74 is prioritized over the determination by the shared charging determiner 75 that the shared charging is available.

With this configuration, the charging plan CP is prioritized over the determination that the shared charging is available, and therefore the determination that the shared charging is available may be changed to "unavailable" as a result of update of the charging plan CP. The charging plan CP, therefore, is not affected by the shared charging, and the charging plan CP can be preferentially ensured.

(Item A3) The sharing system SY according to item A1 or A2, wherein the shared charging determiner 75 is configured or programmed to determine that the shared charging is available when a value obtained by subtracting an amount of electricity to be consumed by charging the subject vehicle 11 from the amount of electricity that the charging station 100 has is equal to or more than a predetermined value.

With this configuration, whether the shared charging by the charging station 100 is available or not can be appropriately determined.

(Item A4) The sharing system SY according to any one of items A1 to A3, further including a permission determiner 76 configured or programmed to determine that the shared charging is permitted by a manager of the charging station 100, and a shared charging plan calculator 77 configured or programmed to, when the shared charging determiner 75 determines that the shared charging is available and the permission determiner 76 determines that the shared charging is permitted, generate a shared charging plan SP to charge the external vehicle 12.

With this configuration, since the shared charging plan SP to charge the external vehicle 12 is generated when it is determined that the shared charging is available and the manager of the charging station 100 permits the shared charging, the shared charging is available only when the manager of the charging station 100 has given permission.

(Item A5) The sharing system SY according to item A4, wherein the shared charging plan calculator 77 is configured or programmed to, based on the amount of electricity to be consumed by charging the subject vehicle 11 and charging time-of-day information which are included in the charging plan CP, calculate a time-of-day during which the shared charging is permitted and an upper limit of the amount of electricity supplied by the shared charging.

With this configuration, the time-of-day during which the shared charging is permitted and the upper limit of the amount of electricity supplied by the shared charging can be appropriately determined.

(Item A6) The sharing system SY according to item A5, wherein the charging station 100 is a portable charging station 100A, and the shared charging plan calculator 77 is configured or programmed to calculate a shared charging position at which the shared charging is to be performed, and calculate the time-of-day during which the shared charging is permitted, based on a time required for the portable charging station 100A to move from a prioritized charging position to the shared charging position and based on the charging time-of-day information relating to charging of the subject vehicle 11, the prioritized charging position being included in the charging plan CP and being a position at which the subject vehicle 11 is to be charged.

With this configuration, the portable charging station 100A can be moved from the prioritized charging position to the shared charging position, and the shared charging can be performed on the external vehicle 12 without affecting the charging plan CP to charge the subject vehicle 11.

(Item A7) The sharing system SY according to item A5, wherein the charging station 100 is a mobile charging station 100B powered by electricity thereof to travel alone, and the shared charging plan calculator 77 is configured or programmed to calculate an upper limit of the amount of electricity to be supplied by the shared charging, based on the amount of electricity to be consumed by the mobile charging station 100B moving from a prioritized charging position to a shared charging position, the prioritized charging position being a position at which the subject vehicle 11 is to be charged and being included in the charging plan CP, the shared charging position being a position at which the shared charging is to be performed.

With this configuration, the upper limit of the amount of electricity supplied by the shared charging can be appropriately determined for the mobile charging station 100B.

(Item A8) The sharing system SY according to item A7, wherein the shared charging plan calculator 77 is configured or programmed to calculate the upper limit of the amount of electricity to be supplied by the shared charging, based on the amount of electricity to be consumed by the charging station 100 to move from the shared charging position to a storage location of the charging station 100 pre-set by the manager.

With this configuration, since the mobile charging station 100B has, after performing the shared charging on the external vehicle 12 at the shared charging position, an amount of electricity to be consumed to move to the storage location of the charging station 100, the mobile charging station 100B can return to the storage location.

(Item A9) The sharing system SY according to any one of items A4 to A8, further including a server 70 configured or programmed to acquire the determination that the shared charging by the charging station 100 is permitted, and transmit, to the external vehicle 12, the shared charging plan SP and position information of the charging station 100 for which the shared charging is permitted.

With this configuration, since the position information of the charging station 100 and the shared charging plan SP are transmitted to the external vehicle 12, the external vehicle 12 can move to the position of the charging station 100 and be subjected to the shared charging specified by the shared charging plan SP.

(Item A10) The sharing system SY according to any one of items A1 to A9, wherein the charging station 100 includes a low-voltage power output 102 and a high-voltage power output 103, and is configured or programmed to, based on a time-of-day during which the shared charging is permitted, determine which of the low-voltage power output 102 and the high-voltage power output 103 to use to perform the permitted shared charging.

With this configuration, the charging by the low-voltage power output 102 (normal charging) and the charging by the high-voltage power output 103 (ultra-fast charging) can be appropriately switched and performed depending on the time-of-day during which the shared charging is permitted. For example, if the time-of-day during which the shared charging is permitted is equal to or longer than a predetermined period (e.g., 3 hours), both the low-voltage power output 102 and the high-voltage power output 103 are permitted to perform charging. That is, both the normal charging and the ultra-fast charging are permitted, and one of the two can be selected and performed. If the time-of-day during which the shared charging is permitted is shorter than the predetermined period (e.g., 3 hours), on the other hand, only the high-voltage power output 103 is permitted to perform charging. That is, only the ultra-fast charging is permitted, and the charging can be performed in the time-of-day during which the shared charging is permitted.

(Item A11) The sharing system SY according to any one of items A1 to A10, wherein the charging station 100 is a mobile charging station 100B powered by electricity thereof to travel alone, and is configured or programmed to, in a case that the shared charging is determined to be available, travel from a prioritized charging position via a shared charging position to a storage location of the charging station 100 such that an amount of electricity for the charging station 100 to travel from the shared charging position to the storage location is at least ensured when the shared charging ends, the shared charging position being a position at which the shared charging is to be performed, the prioritized charging position being a position at which the subject vehicle 11 is to be charged and being included in the charging plan CP.

With this configuration, even when the mobile charging station 100B has performed the shared charging on the external vehicle 12 not included in the work plan WP, the mobile charging station 100B can travel alone back to the storage location from the prioritized charging position via the shared charging position. The charging station 100, therefore, can be charged at the storage location and prepare for a next work plan WP.

(Item A12) The sharing system SY according to item A9, further including a terminal 60, wherein the server 70 is configured or programmed to transmit, to the terminal 60, the shared charging plan SP and position information of the charging station 100 for which the shared charging is permitted.

With this configuration, since the position information of the charging station 100 and the shared charging plan SP are transmitted to the terminal 60, the position of the charging station 100 and the shared charging plan SP can be checked on the terminal 60.

(Item A13) The sharing system SY according to item A12, wherein the terminal 60 is a first terminal 60A operable by the manager of the charging station 100.

With this configuration, the position of the charging station 100 and the shared charging plan SP can be checked on the first terminal 60A operable by the manager of the charging station 100.

(Item A14) The sharing system SY according to item A12, wherein the terminal 60 includes a second terminal 60B in or on the external vehicle 12.

With this configuration, the position of the charging station 100 and the shared charging plan SP can be checked on the second terminal 60B in or on the external vehicle 12.

(Item A15) The sharing system SY according to any one of items A1 to A14, wherein a second terminal 60B is configured or programmed to, upon receipt of a request for a reservation of the shared charging, transmit, to the shared charging determiner 75, reservation information indicating that the reservation of the shared charging is requested, the shared charging determiner 75 is configured or programmed to transmit, to the second terminal 60B, a result of the determination of whether the shared charging for which the reservation is requested is available or not, and the second terminal 60B is configured or programmed to display the result of the determination of whether the shared charging is available or not.

With this configuration, a reservation for the shared charging can be requested, and whether the shared charging for which the reservation is requested is available or not can be checked on the second terminal 60B.

While example embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. A sharing system to share a charging station to charge electric vehicles, the sharing system comprising:
a charging plan calculator configured or programmed to, based on an amount of electricity that the charging station has, based on a work plan including work to be done by a subject vehicle which is an electric vehicle, and based on a remaining battery level of the subject vehicle, calculate a charging plan to ensure charging of the subject vehicle by the charging station; and
a shared charging determiner configured or programmed to, based on the amount of electricity that the charging station has and based on the charging plan, determine whether shared charging is available or not, the shared charging including using the charging station to charge an external vehicle other than the subject vehicle.

2. The sharing system according to claim 1, wherein the charging plan calculated by the charging plan calculator is prioritized over the determination by the shared charging determiner that the shared charging is available.

3. The sharing system according to claim 1, wherein the shared charging determiner is configured or programmed to determine that the shared charging is available when a value obtained by subtracting an amount of electricity to be consumed by charging the subject vehicle from the amount of electricity that the charging station has is equal to or more than a predetermined value.

4. The sharing system according to claim 1, further comprising:
a permission determiner configured or programmed to determine that the shared charging is permitted by a manager of the charging station; and
a shared charging plan calculator configured or programmed to, when the shared charging determiner determines that the shared charging is available and the permission determiner determines that the shared charging is permitted, generate a shared charging plan to charge the external vehicle.

5. The sharing system according to claim 4, wherein the shared charging plan calculator is configured or programmed to, based on an amount of electricity to be consumed by charging the subject vehicle and charging time-of-day information which are included in the charging plan, calculate a time-of-day during which the shared charging is permitted and an upper limit of the amount of electricity supplied by the shared charging.

6. The sharing system according to claim 5, wherein
the charging station is a portable charging station; and
the shared charging plan calculator is configured or programmed to:
calculate a shared charging position at which the shared charging is to be performed; and
calculate the time-of-day during which the shared charging is permitted, based on a time required for the portable charging station to move from a prioritized charging position to the shared charging position and based on the charging time-of-day information relating to charging of the subject vehicle, the prioritized charging position being included in the charging plan and being a position at which the subject vehicle is to be charged.

7. The sharing system according to claim 5, wherein
the charging station is a mobile charging station powered by electricity thereof to travel alone; and
the shared charging plan calculator is configured or programmed to calculate an upper limit of the amount of electricity to be supplied by the shared charging, based on the amount of electricity to be consumed by the mobile charging station moving from a prioritized charging position to a shared charging position, the prioritized charging position being a position at which the subject vehicle is to be charged and being included in the charging plan, the shared charging position being a position at which the shared charging is to be performed.

8. The sharing system according to claim 7, wherein the shared charging plan calculator is configured or programmed to calculate the upper limit of the amount of electricity to be supplied by the shared charging, based on the amount of electricity to be consumed by the charging station to move from the shared charging position to a storage location of the charging station pre-set by the manager.

9. The sharing system according to claim 4, further comprising a server, wherein
the server is configured or programmed to:
acquire the determination that the shared charging by the charging station is permitted; and
transmit, to the external vehicle, the shared charging plan and position information of the charging station for which the shared charging is permitted.

10. The sharing system according to claim 1, wherein the charging station:
includes a low-voltage power output and a high-voltage power output; and
is configured or programmed to, based on a time-of-day during which the shared charging is permitted, determine which of the low-voltage power output and the high-voltage power output to use to perform the permitted shared charging.

11. The sharing system according to claim 1, wherein the charging station is:
a mobile charging station powered by electricity thereof to travel alone; and
is configured or programmed to, in a case that the shared charging is determined to be available, travel from a prioritized charging position via a shared charging position to a storage location of the charging station such that an amount of electricity for the charging station to travel from the shared charging position to the storage location is at least ensured when the shared charging ends, the shared charging position being a position at which the shared charging is to be performed, the prioritized charging position being a position at which the subject vehicle is to be charged and being included in the charging plan.

12. The sharing system according to claim 9, further comprising a terminal; wherein the server is configured or programmed to transmit, to the terminal, the shared charging plan and position information of the charging station for which the shared charging is permitted.

13. The sharing system according to claim 12, wherein the terminal is a first terminal operable by the manager of the charging station.

14. The sharing system according to claim 12, wherein the terminal includes a second terminal in or on the external vehicle.

15. The sharing system according to claim 1, wherein
a second terminal is configured or programmed to, upon receipt of a request for a reservation of the shared charging, transmit, to the shared charging determiner, reservation information indicating that the reservation of the shared charging is requested;
the shared charging determiner is configured or programmed to transmit, to the second terminal, a result of the determination of whether the shared charging for which the reservation is requested is available or not; and
the second terminal is configured or programmed to display the result of the determination of whether the shared charging is available or not.
